# EUROPÄISCHE PATENTSCHRIFT

(11) **EP 3 334 244 B1**
(45) Veröffentlichungstag und Bekanntmachung des Hinweises auf die Patenterteilung: **11.12.2019**
(21) Anmeldenummer: 17154774.8
(22) Anmeldetag: 06.02.2017
(51) Int. Cl.: H05B 3/24, B60H 1/22, F24H 3/04, F24H 9/18, H05B 1/02, F24H 1/00, F24H 1/12, H05B 3/02, H05B 3/06, H05B 3/14, H05B 3/04, F24H 9/20, F24H 1/10

(54) **ELEKTRISCHE HEIZVORRICHTUNG UND PTC-HEIZELEMENT FÜR EINE SOLCHE**
ELECTRIC HEATING DEVICE AND PTC HEATING ELEMENT FOR SAME
DISPOSITIF DE CHAUFFAGE ÉLECTRIQUE ET ÉLÉMENT DE CHAUFFAGE PTC POUR UN TEL DISPOSITIF DE CHAUFFAGE ÉLECTRIQUE

(30) Priorität: 06.12.2016 DE 102016224296
(43) Veröffentlichungstag der Anmeldung: 13.06.2018
(73) Patentinhaber: Eberspächer catem GmbH & Co. KG, 76863 Herxheim (DE)
(72) Erfinder: Bohlender, Franz, 76870 Kandel (DE); Schwarzer, Andreas, 60433 Frankfurt am Main (DE)
(74) Vertreter: Grünecker Patent- und Rechtsanwälte PartG mbB

(56) Entgegenhaltungen:
- EP-A1- 2 503 844
- EP-A1- 2 607 121
- EP-A2- 0 026 457
- EP-A2- 2 547 171

## Beschreibung

Die vorliegende Erfindung betrifft eine elektrische Heizvorrichtung mit mehreren in einer Zirkulationskammer angeordneten PTC-Heizelementen mit einem Heizelementgehäuse, das zumindest ein PTC-Element und das PTC-Element bestromende und Kontaktzungen für eine elektrische Steckverbindung ausformende Kontaktbleche als bauliche Einheit fügt, und mit einer Trennwand, die die Zirkulationskammer von einer Anschlusskammer trennt, in der die die Trennwand durchragende Kontaktzungen des PTC-Heizelementes freiliegen und elektrisch angeschlossen sind. Eine solche elektrische Heizvorrichtung ist beispielsweise aus der EP 2 607 121 A1 bekannt. Diese elektrische Heizvorrichtung ist als Luftheizer ausgebildet.

In einem das Heizelementgehäuse ausbildenden Positionsrahmen sind mehrere PTC-Elemente aufgenommen, die an gegenüberliegenden Hauptseitenflächen mit einem Kontaktblech kontaktiert sind, welche mit dem Positionsrahmen verrastet sind. An einer Stirnseite wird das Heizelementgehäuse von Anschlussstutzen überragt, die einteilig an dem Heizelementgehäuse angeformt sind und über welche Dichtungshülsen aus Teflon mit einer an der Außenumfangsfläche vorgesehenen Labyrinthdichtung gezogen sind. An der den PTC-Elementen abgewandten Außenseite der Kontaktbleche sind jeweils Isolierlagen aufgebracht, die aus einer Kunststofffolie gebildet sind.

Die EP 2 503 844 A1 offenbart eine elektrische Heizeinrichtung mit einem metallischen Gehäuse, welches einheitliche wärmeabgebende Rippen ausbildet und stirnseitig mit einer Bohrung versehen ist, in welche ein PTC-Heizelement eingesetzt ist. Dieses PTC-Heizelement hat ein Kontaktblech, welches mit einem weichelastischen Material zur Ausbildung eines ringförmigen Gehäuses umspritzt ist, welches einen stirnseitigen Dichtwulst ausbildet. Der Dichtwulst begrenzt eine ringförmige Aufnahme, in welche ein PTC-Element eingesetzt ist, welches einseitig gegen das Kontaktblech anliegt. Die andere freie Oberfläche des PTC-Elementes kontaktiert den Boden der Bohrung des Metallgehäuses, welches den Massepol ausbildet. Von dem ringförmigen Dichtwulst ragt in axialer Richtung eine durch das Kontaktblech gebildete Kontaktzunge ab, die überwiegend von dem elastomeren Material umsiegelt ist, um das Kontaktblech elektrisch isoliert aus dem Gehäuse herauszuführen. Die Anschlussmöglichkeit für die andere Polarität wird durch ein Kontaktblech gebildet, welches nicht gegenüber dem Gehäuse isoliert, sondern unmittelbar mit diesem verbunden ist. Dieses PTC-Heizelement ist in die zentrale Bohrung des metallischen Gehäuses eingesetzt und über einen in die Bohrung eingepressten Metalldeckel darin unter Druck gehalten, um eine gute elektrische Kontaktierung zwischen dem PTC-Element und dem Kontaktblech und eine gute elektrische Kontaktierung zwischen der gegenüberliegenden Seite des PTC-Elementes und dem Boden des Gehäuses und damit auch eine gute wärmeleitende Verbindung zu dem Gehäuse zu schaffen.

Die EP 0 026 457 A2 offenbart ein PTC-Heizelement mit einem spritzgegossenem Kunststoffrahmen und Aluminiumoxidplatten, die durch Umpritzen des Kunststoffmaterials des Rahmens mit diesem verbunden und innenseitig mit einer Metallisierung versehen sind, die flächig auf die Innenfläche der Aluminiumoxidplatten aufgebracht ist. Durch den Rahmen hindurch ist eine metallische Anschlusszunge geführt, die elektrisch leitend mit der Metallisierung 4 durch Löten verbunden ist.

Aus der EP 1 253 808 A1 bzw. EP 1 395 098 A1 sind PTC-Heizelemente ähnlich zu EP 2 607 121 A1 bekannt. Bei diesem Stand der Technik wird zumindest einseitig das Kontaktblech zusammen mit der Isolierlage bei der Herstellung des Heizelementgehäuses umspritzt, so dass lediglich die PTC-Elemente in die Öffnung des rahmenförmigen Heizelementgehäuses eingelegt und an der gegenüberliegenden Seite mit dem Kontaktblech und der Isolierung zu überdecken sind.

Eine solche Ausgestaltung stellt zwar gegenüber dem zuvor beschriebenen Stand der Technik eine fertigungstechnische Vereinfachung dar. Der Aufbau ist aber weiterhin relativ raumgreifend und aufwändig. Die vorliegende Erfindung will ein PTC-Element insbesondere für die Kraftfahrzeugindustrie angeben. In Kraftfahrzeugen, insbesondere im Bereich der Elektromobilität, kommen verstärkt PTC-Heizelemente zum Einsatz. Diese müssen sich kostengünstig herstellen lassen und möglichst leicht sein. Des Weiteren ist eine gute Wärmeauskopplung der von dem PTC-Element erzeugten Wärme gewünscht, da die PTC-Elemente selbstregelnde Eigenschaften haben und nur mit schlechtem Wirkungsgrad betrieben werden können, wenn die von dem PTC-Element erzeugte Wärme nur unzureichend abgeführt wird.

Gattungsgemäß kann aber auch die auf die Anmelderin zurückgehende EP 2 440 004 A1 angesehen werden, die eine elektrische Heizvorrichtung zur Erwärmung eines flüssigen Mediums offenbart. In der speziellen Beschreibung wird auch ein Heizelementgehäuse offenbart, welches als solches aus EP 1 921 896 A1 bekannt ist und in der elektrischen Heizvorrichtung gemäß EP 2 440 004 A1 verbaut ist.

Die vorliegende Erfindung betrifft insbesondere eine elektrische Heizvorrichtung für ein Kraftfahrzeug. Solche Komponenten werden seit jeher gewichtsoptimiert ausgebildet. Des Weiteren muss aufgrund der hohen Stückzahlen in der Kfz-Industrie auf eine wirtschaftliche Herstellbarkeit geachtet werden. Bei elektrischen Heizvorrichtungen mit PTC-Heizelementen sind des Weiteren Ausgestaltungen zu bevorzugen, die zu einer möglichst unmittelbaren und symmetrischen Wärmeableitung der in dem PTC-Element erzeugten Wärme ermöglichen.

Der vorliegenden Erfindung liegt das Problem zugrunde, eine elektrische Heizvorrichtung und ein PTC-Heizelement für eine solche elektrische Heizvorrichtung anzugeben, die sich wirtschaftlich herstellen lassen.

Zur Lösung des erstgenannten Aspekts wird mit der vorliegenden Erfindung eine elektrische Heizvorrichtung mit den Merkmalen von Anspruch 1 angegeben. Diese elektrische Heizvorrichtung ist bevorzugt eine elektrische Heizvorrichtung für ein Kraftfahrzeug. Sie ist insbesondere eine elektrische Heizvorrichtung für die Erwärmung eines flüssigen Mediums, was bedingt, dass die die Anschlusskammer von der Zirkulationskammer trennende Trennwand fluiddicht ausgebildet ist. Regelmäßig sind zu der Zirkulationskammer führende Ein- und Auslassöffnungen in Form von Anschlussstutzen ausgebildet, die von einem Gehäuse der elektrischen Heizvorrichtung, welches die Trennwand üblicherweise in sich aufnimmt, außenseitig abragen.

Die elektrische Heizvorrichtung nach der vorliegenden Erfindung hat ein PTC-Heizelement. Zwischen der Zirkulationskammer und der Anschlusskammer, in welcher die Kontaktzungen des PTC-Heizelementes für den elektrischen Anschluss freiliegen, ist eine Trennwand vorgesehen. Die Trennwand ist üblicherweise Teil des Gehäuses der elektrischen Heizvorrichtung. Die Trennwand ist üblicherweise innerhalb des Gehäuses vorgesehen. Die Zirkulationskammer und die Anschlusskammer sind bevorzugt jeweils durch Gehäusedeckel abgedeckt, die mit einem ersten und/oder zweiten Gehäuseteil verbunden sind. Bevorzugt ist das elektrische Gehäuse der vorliegenden Erfindung durch ein einteiliges Gehäusebasisteil gebildet, welches endseitig bevorzugt durch im Wesentlichen plattenförmige Abdeckelemente verschlossen ist. Das Gehäusebasisteil ist bevorzugt aus Kunststoff hergestellt, bevorzugt aus einem vernetzenden Kunststoff, wie beispielsweise einem Duroplasten.

Erfindungsgemäß wird vorgeschlagen, dass zwischen der Trennwand und dem PTC-Heizelement eine Steckverbindung ausgebildet ist. Durch diese Steckverbindung ist das PTC-Heizelement in Steckverbindung reibschlüssig an der Trennwand gehalten. Diese Ausgestaltung bietet die Möglichkeit, die PTC-Heizelemente zunächst als separate Bauteile herzustellen, mit einem männlichen Steckelement als Teil des Heizelementgehäuses. In solcher Weise vorbereitet, können die PTC-Heizelemente allein durch die Steckverbindung an der Trennwand zumindest vorläufig montiert und damit verbunden werden. Sie sind damit reibschlüssig an der Trennwand gehalten. Die so vormontierte Baueinheit kann weiterverarbeitet werden. So kann beispielsweise ein die Zirkulationskammer schließender Gehäusedeckel gegen ein Gehäuseteil, beispielsweise das Gehäusebasisteil angelegt werden, um die Zirkulationskammer zu schließen. Dabei kann der entsprechende Gehäusedeckel bzw. ein gefügtes Gehäuseteil auch endseitig gegen die PTC-Heizelemente angelegt werden, um die zunächst vorläufige Steckverbindung dauerhaft für den Betrieb der PTC-Heizvorrichtung in einem Kraftfahrzeug, in dem regelmäßig relative hohe Vibrationen auftreten können, zu sichern.

Zwar offenbart auch die EP 2 607 121 A1 eine Steckverbindung zwischen einem Heizelementgehäuse und einer Trennwand bei einem Luftheizer. Allerdings wird durch diese Steckverbindung lediglich eine Abdichtung in Umfangsrichtung der an dem Heizelementgehäuse ausgebildeten Stutzen bewirkt. Die Steckverbindung ist nicht geeignet, das PTC-Heizelement in Steckrichtung reib- und/oder formschlüssig an der Trennwand zu halten. Die Steckverbindung nach EP 2 607 121 A1 hält das PTC-Heizelement lediglich in Position relativ zu der Trennwand in einer Richtung quer zur Steckrichtung.

Der Steckverbindung zugeordnete Dichtungsmittel sind dabei bevorzugt so ausgebildet, dass das PTC-Heizelement gegenüber der Trennwand fluiddicht abgedichtet ist. Als Fluid wird hierbei insbesondere eine Flüssigkeit verstanden, die mit Überdruck in die Zirkulationskammer eingeleitet wird. Der Systemdruck der Flüssigkeit liegt bei etwa 1,5 bis 3 bar. Die Dichtmittel sind solcher Qualität, dass auch bei höherem Systemdrücken keine Flüssigkeit von der Zirkulationskammer in die Anschlusskammer gelangen kann.

Das Heizelement bildet erfindungsgemäß das männliche Steckelement aus und die Trennwand das weibliche Steckelement der Steckverbindung. Das PTC-Heizelement hat dafür einen die Kontaktzungen umgebenden weichelastischen Dichtkragen. Dieser ist in einer Steckaufnahme der Trennwand dichtend eingepresst. Der Dichtkragen ist bevorzugt einteilig mit dem Heizelementgehäuse ausgebildet, welches hierzu bevorzugt aus einem Elastomer gebildet ist.

Der Dichtkragen ist so ausgebildet, dass das PTC-Heizelement in Steckrichtung reibschlüssig an der Trennwand gehalten ist.

Die konkrete Ausgestaltung des erfindungsgemäßen PTC-Heizelementes wird in dem nebengeordneten Anspruch 3 und in den darauf zurückbezogen und auf das PTC-Heizelement gerichteten Ansprüchen definiert.

Das erfindungsgemäße PTC-Heizelement hat ein durch einen Elastomer gebildetes Heizelementgehäuse. Das Elastomer ist bevorzugt kein thermoplastisches Elastomer, sondern ein vernetztes Elastomer, welches durch Wärmezufuhr nicht aufschmelzbar ist. Dieses Heizelementgehäuse siegelt das wenigstens eine PTC-Element umfänglich ein und umschließt dieses. Durch das Heizelementgehäuse wird bevorzugt ein männliches Steckelement einer Steckverbindung ausgebildet.

Bevorzugt bildet das Elastomer einen die Kontaktzungen umfänglich einsiegelnden Dichtkragen aus. Dieser Dichtkragen ist als Steckverbindung für die Halterung des PTC-Heizelementes in Einstreckrichtung angepasst ausgebildet.

Gemäß einer bevorzugten Ausgestaltung der vorliegenden Erfindung ist der Dichtkragen in Richtung der freien Enden der Kontaktzungen konisch zulaufend ausgebildet. Der Dichtkragen kann als Labyrinthdichtung mit mehreren für sich jeweils konisch zulaufenden Segmenten versehen sein. Die einzelnen Segmente sind dabei in Längsrichtung der Kontaktzunge hintereinander vorgesehen und beispielsweise so dimensioniert, dass sämtliche Segmente identische maximale Breite haben. Am Ende dieses Dichtkragens kann durch das Elastomermaterial des Heizelementgehäuses ein Anschlag ausgebildet sein, der axial und/oder radial mit einer durch die Trennwand gebildeten Gegenfläche zusammenwirkt. Der Anschlag ist üblicherweise scheibenförmig ausgeformt.

Der Dichtkragen kann insgesamt aus dem Elastomermaterial gebildet sein. In diesem Fall wird der Dichtkragen lediglich durch das die Kontaktzunge bildende Blechmaterial durchsetzt. Der Dichtkragen kann aber auch als verhältnismäßig dünne Schicht auf einem Stopfenelement vorgesehen sein, welches von dem die Kontaktzunge ausbildenden Blech durchsetzt ist. Dieses Stopfenelement kann beispielsweise aus einem Kunststoff gebildet sein, der mittels Umspritzen des Blechmaterials mit diesem verbunden wird. Ein Stopfenelement kann dabei zwei Kontaktbleche in vorbestimmtem Abstand halten und damit fügen. Das so vorbereitete Stopfenelement kann zusammen mit den Kontaktblechen, die bevorzugt bereits mit dem PTC-Element elektrisch leitend kontaktiert sind, in eine Spritzgießform eingesetzt werden, um das Heizelementgehäuse im Wege des Spritzgießens auszubilden und mit dem PTC-Element, bevorzugt zusammen mit einer außenseitig unmittelbar auf das PTC-Element aufgelegten Isolierlage zu verbinden.

So wird mit einer bevorzugten Weiterbildung der vorliegenden Erfindung vorgeschlagen, das Gehäuse als die Kontaktbleche und das wenigstens ein PTC-Element lediglich umfänglich fassender Rahmen auszubilden. Der Rahmen bildet einander gegenüberliegende Rahmenöffnungen aus, hinter denen das PTC-Element freiliegt. In zumindest einer der Rahmenöffnungen liegt bevorzugt die Isolierplatte, die bevorzugt durch eine Keramikplatte gebildet wird, frei. Hinter der Isolierplatte befindet sich üblicherweise unmittelbar das PTC-Element. So erfolgt die Kontaktierung des PTC-Elementes bevorzugt stirnseitig, was eine gute Auskopplung der durch das PTC-Element erzeugten Wärme begünstigt.

Der Rahmen ist als verhältnismäßig dünnes Bauteil ausgeformt, so dass er innerhalb der Zirkulationskammer nur wenig Bauraum einnimmt. Dies bietet die Möglichkeit, die einzelnen PTC-Heizelemente innerhalb der Zirkulationskammer relativ dicht nebeneinander anzuordnen. Allein der Dichtkragen überragt die Dicke des Rahmens nicht unwesentlich. So wird gemäß einer bevorzugten Weiterbildung der vorliegenden Erfindung vorgeschlagen, den Rahmen mit einer Dichte von nicht größer als 0,5 der Dicke des Dichtkragens auszubilden.

Des Weiteren sind einander gegenüberliegende Hauptseitenflächen des PTC-Elementes bevorzugt überwiegend nicht mit dem das Heizelementgehäuse ausbildenden Elastomer belegt. Dies bedeutet, dass zumindest 85% einer Hauptseitenfläche des PTC-Elementes innerhalb der Rahmenöffnung freiliegt und nicht von dem Elastomermaterial bedeckt ist. In entsprechender Weise wird vorgeschlagen, dass einander gegenüberliegende Hauptseitenflächen des PTC-Elementes ganz überwiegend nicht mit einem Kontaktblech belegt sind. Die Kontaktierung des bzw. der PTC-Elemente erfolgt somit überwiegend, bevorzugt ausschließlich, über die Stirnseite des bzw. der PTC-Elemente. So liegt die Isolierlage regelmäßig unmittelbar an dem PTC-Element an. Besonders bevorzugt wird das PTC-Element durch die gegenüberliegenden Isolierlagen überragt. Das Kontaktblech ist dabei üblicherweise dasjenige Element des PTC-Heizelementes, welches die Kontaktzunge ausformt und unmittelbar elektrisch leitend als Elektrode mit dem PTC-Element verbunden, bevorzugt daran angeklebt ist.

Die Isolierlagen können aus einer ein- oder mehrschichtigen Isolierplatte gebildet sein, die im Wesentlichen die gesamte Hauptseitenfläche des PTC-Elementes abdeckt, diese regelmäßig überdeckt, d.h. zumindest einseitig, bevorzugt mehrseitig und besonders bevorzugt vollumfänglich das PTC-Element überragt. Die Isolierlage kann beispielsweise durch eine Kombination einer Keramikplatte mit einer Kunststoffplatte gebildet sein. Die Isolierlage kann aber auch beispielsweise durch Beschichten des PCT-Elementes mit einem elektrisch isolierenden Material ausgebildet sein. In diesem Fall bildet das PTC-Element das Substrat aus, und die Außenfläche der Isolierlage liegt üblicherweise innerhalb des Kunststoffrahmens frei, so dass sich ein guter Wärmeaustrag der von dem PCT-Element erzeugten Wärme ergibt. Als Beschichtung kommt beispielsweise eine keramische Beschichtung in Frage, die mittels PVD oder CVD auf dem PTC-Element als Substrat aufgebracht ist. Eine als isolierende Beschichtung auf die Hauptseitenfläche des PTC-Elementes aufgebrachte Isolierlage kann mit einer Isolierplatte aus Keramik und/oder Kunststoff kombiniert werden.

In solcher Weise ausgebildet, formt das Kontaktblech einen Blechstreifen aus. Der Blechstreifen hat bevorzugt einen stirnseitig an dem PTC-Element anliegenden Kontaktsteg und formt des Weiteren die Kontaktzunge aus. Die Kontaktzungen der beiden elektrisch leitend an gegenüberliegenden Stirnseiten des PTC-Elementes anliegenden Blechstreifen sind jeweils gegenüber dem zugeordneten Kontaktsteg in der breiten Ebene des PTC-Elementes verbreitert. Üblicherweise überragen die Kontaktzungen das PTC-Element in Längen- und Breitenrichtung und sind aufeinander zu gerichtet.

Gemäß einer bevorzugten Weiterbildung der vorliegenden Erfindung ist der Kunststoffrahmen an seiner Außenseite mit einem verjüngten Anlagesteg versehen. Dieser Anlagesteg ist in Dickenrichtung des Kunststoffrahmens verjüngt ausgebildet. Der Anlagesteg ist üblicherweise zumindest an einem Rahmenholm des Kunststoffrahmens vorgesehen. Besonders bevorzugt ist der Anlagesteg an drei aufeinander folgenden Außenseiten bzw. Rahmenholmen des Kunststoffrahmens vorgesehen. An der den Kontaktflächen gegenüber liegenden Seite des Kunststoffrahmens bildet der unterseitige Anlagesteg eine Abdichtung gegenüber dem Boden eines Heizergehäuses. Die sich dazu rechtwinklig ersteckenden randseitigen Anlagestege dienen der Abdichtung gegenüber einer seitlichen Wand des Heizergehäuses. So können die PTC-Elemente alternierend versetzt vorgesehen sein, so dass jedes erste PTC-Heizelement an einer, beispielsweise linken Seite an dem Heizergehäuse anliegt, wohingegen jedes zweite PTC-Heizelement an der gegenüberliegenden, rechten Gehäusewand anliegt. Hierdurch wird auf einfache Weise ein mäandrierender Strömungskanal gebildet. Die randseitigen Anlagestege dichten das PTC-Heizelement gegenüber dem Heizergehäuse ab. Der Anlagesteg ist bevorzugt einteilig ausgeformt, d.h. integraler Bestandteil des spritzgegossenen Kunststoffrahmens. Insbesondere der untere Anlagesteg kann auch als Kompressionselement genutzt werden, um nach Einbau des erfindungsgemäßen PTC-Heizelementes in das Heizergehäuse eine bestimmte Einbaulage durch elastische Vorspannkraft zu sichern. Diese Sicherung kann eine mechanische Sicherung sein, um das PTC-Heizelement mechanisch an dem Heizergehäuse festzulegen. Die Vorspannkraft kann aber auch oder ergänzend für eine zuverlässige Kontaktierung der Kontaktzungen durch Vorspannung des PTC-Heizelementes sorgen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Draufsicht auf ein erstes Ausführungsbeispiel eines Gehäuses;
- Figur 2: eine perspektivische Seitenansicht des in Figur 1 gezeigten Ausführungsbeispiels;
- Figur 3: eine in dem ersten Ausführungsbeispiel vorgesehene Abdeckplatte 22 in isolierter Darstellung zusammen mit PTC-Heizelementen;
- Figur 4: die in Figur 3 gezeigte Abdeckplatte beim Bestücken mit einem PTC-Heizelement;
- Figur 5: eine seitliche perspektivische Schnittansicht eines zweiten Ausführungsbeispiels der vorliegenden Erfindung;
- Figur 6: das Detail VI gemäß der Darstellung in Figur 5;
- Figur 7: eine perspektivische Sicht in die Steuerwanne des zweiten Ausführungsbeispiels;
- Figur 8: eine perspektivische Längsschnittansicht entlang der Linie VIII-VIII gemäß der Darstellung in Figur 7;
- Figur 9: eine perspektivische, teilweise aufgebrochene Seitenansicht des zweiten Ausführungsbeispiels mit einer an dem Kunststoffgehäuse vorgesehenen Abschirmung;
- Figur 10: eine perspektivische Seitenansicht von Teilen des PTC-Heizelementes;
- Figur 11: eine teilweise gebrochene perspektivische Seitenansicht des PTC-Heizelementes;
- Figur 12: eine perspektivische Querschnittsansicht des PTC-Heizelementes;
- Figur 13: eine Längsschnittansicht durch die Abdeckplatte gemäß den Figuren 3, 4 mit einem einzelnen darin aufgenommenen PTC-Heizelement;
- Figur 14: eine perspektivische Seitenansicht bei entfernten Gehäusedeckel eines weiteren Ausführungsbeispiels;
- Figur 15: eine Ansicht ähnlich zu Figur 14 ohne Gehäusedeckel des weiteren Ausführungsbeispiels und
- Figur 16: eine perspektivische Schnittansicht durch die Trennwand des weiteren Ausführungsbeispiels.

### 1. Grundsätzlicher Aufbau der Heizvorrichtung

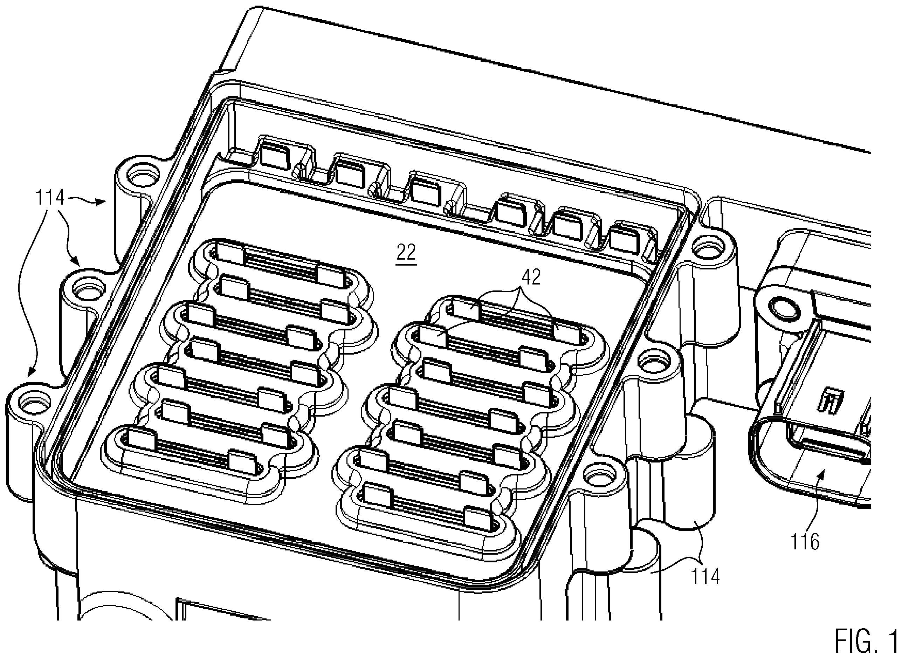

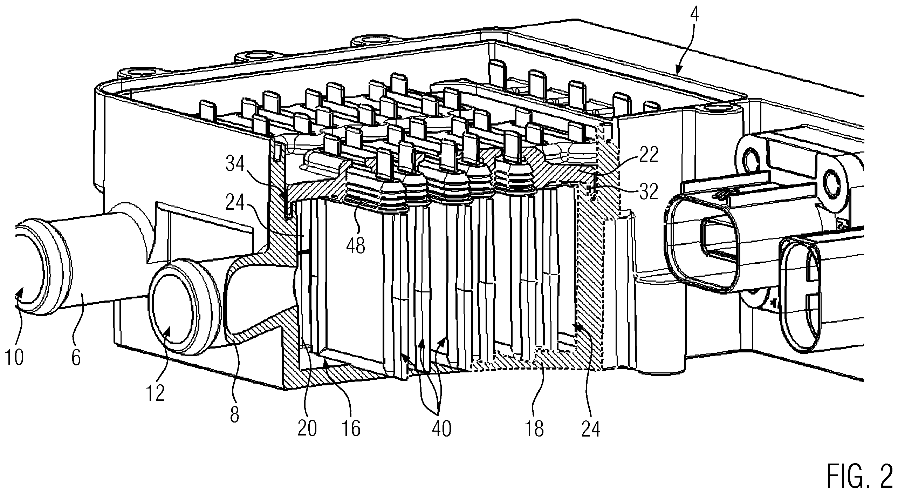

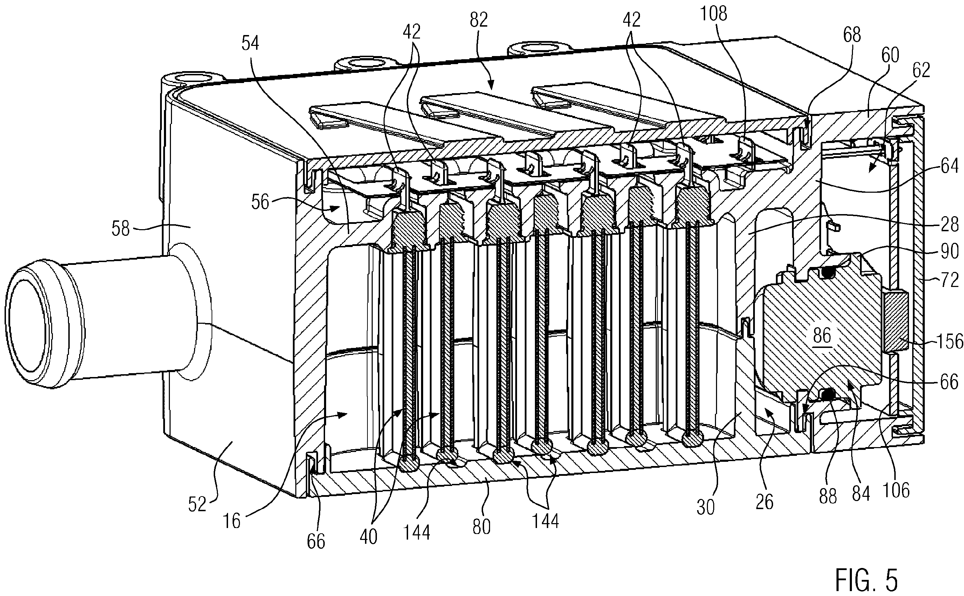

Figur 1 zeigt eine perspektivische Draufsicht auf ein mit Bezugszeichen 2 gekennzeichnetes Gehäuse einer als Wasserheizer ausgebildeten elektrischen Heizvorrichtung. Das Gehäuse 2 hat ein Gehäusewannenelement 4 aus Kunststoff. Dieser Kunststoff ist vorliegend ein Duroplast. Das Gehäuse 2 bildet einen Einlassstutzen 6 und einen Auslassstutzen 8 aus, die vorliegend einteilig an dem Gehäusewannenelement 4 ausgebildet sind. Die Stutzen 6, 8 sind als Schlauchanschlussstutzen ausgebildet und bilden eine Einlassöffnung 10 bzw. eine Auslassöffnung 12 zu einer mit Bezugszeichen 14 gekennzeichneten Zirkulationskammer aus. Die Zirkulationskammer 14 ist in zwei Heizkammern geteilt, von denen in den Figuren 1 und 2 lediglich die in der Darstellung vordere Heizkammer 16 zu erkennen ist. Die Unterteilung der Zirkulationskammer 14 erfolgt durch eine einteilig an dem Gehäusewannenelement 4 ausgebildete und von dessen Boden 18 nach innen abragende Teilungswand 20, die durch eine an einer mit Bezugszeichen 22 gekennzeichneten Abdeckplatte ausgebildete und mit Bezugszeichen 24 gekennzeichnete weitere Teilungswand 24 ihre Fortsetzung findet. An der den beiden Stutzen 6, 8 gegenüberliegenden Seite sind die beiden Heizkammern 16 durch einen Verbindungskanal miteinander verbunden, der in dem zweiten Ausführungsbeispiel eines Gehäuses 2 gemäß Figur 5 zu erkennen und dort mit Bezugszeichen 26 gekennzeichnet ist. Dieser Verbindungskanal 26 wird durch ein Kanalwandsegment 28, welches einteilig an der Abdeckplatte 22 angeformt ist und sich rechtwinklig zu der Teilungswand 20 erstreckt, und ein Kanalwandsegment 30, welches von dem Boden 18 des Gehäusewannenelementes 4 abragt, von der Heizkammer 16 getrennt.

Die Abdeckplatte 22 ist aus Kunststoff hergestellt. Vorliegend ist die Abdeckplatte 22 aus einem Duroplasten gebildet. Grundsätzlich hat die Verwendung von Duroplasten zur Herstellung des Gehäuses 2 oder Teile davon den Vorteil, dass ein Duroplast eine relativ hohe Temperaturbeständigkeit von etwa 150°C hat und auch bei Temperaturen von -40°C keine Sprödigkeit zeigt. Damit ergibt sich für ein aus einem Duroplasten ganz oder teilweise gebildeten Gehäuse eine bessere Temperaturbeständigkeit bei Anforderungen, die im Heizbetrieb und beim Betrieb von Fahrzeugen in arktischen Regionen auftreten. Der Duroplast ist aber auch zu bevorzugen gegenüber einem Thermoplasten, da ein Duroplast eine bessere Kriechstrom-Festigkeit als ein Thermoplast hat.

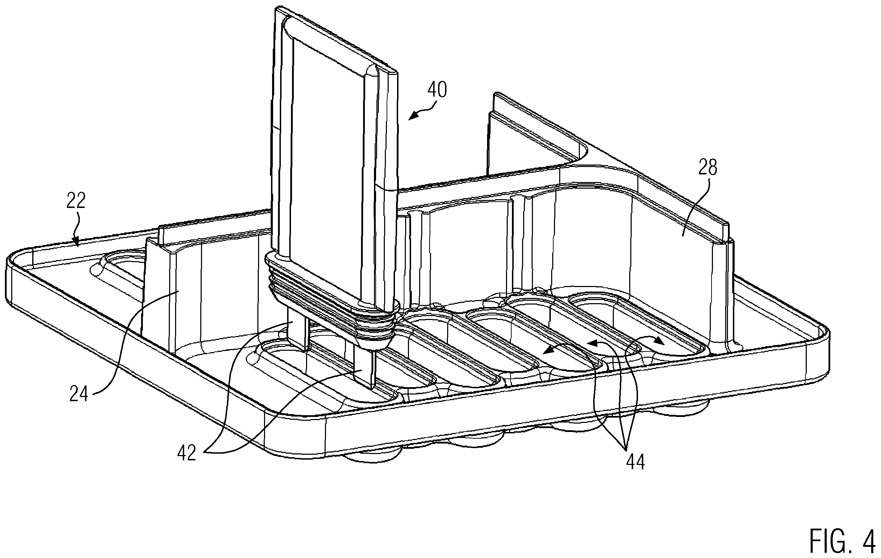

Die Figur 4 zeigt die Abdeckplatte 22 ohne das Gehäusewannenelement 4. Die Abdeckplatte 22 hat einen umlaufenden Rand 32, der mit einer an dem Gehäusewannenelement 4 ausgebildeten umlaufenden Nut 34 zusammenwirkt. Diese Nut 34 ist mit Kleber, vorliegend Epoxidkleber gefüllt, bevor der Rand 32 in die Nut 34 eindringt, um das Abdeckelement 22 mit dem Gehäusewannenelement zu verkleben. In gleicher Weise werden die Segmente 24 bzw. 28 mit den korrespondierenden Wandelementen 20 bzw. 30 des Gehäusewannenelementes 4 gefügt. Danach ist die Zirkulationskammer 14 fluiddicht zwischen dem Boden 18 des Gehäusewannenelementes 4 und dem Abdeckelement 22 und umfänglich umgeben von Wandungen eingeschlossen, die durch das Gehäusewannenelement 4 gebildet sind und die sich rechtwinklig zu dessen Boden 18 erstrecken.

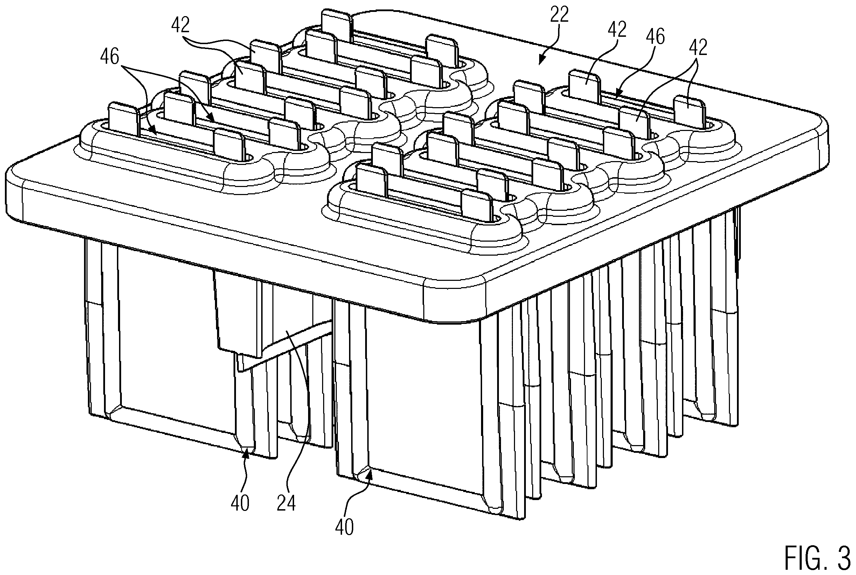

Vor der Montage wird das Abdeckelement 22 in der aus den Figuren 3 und 4 ersichtlichen Weise mit PTC-Heizelementen 40 bestückt. Die PTC-Heizelemente 40 sind dazu anschlussseitig, d.h. dort, wo die PTC-Heizelemente 40 jeweils zwei Kontaktzungen 42 aufweisen, in weibliche Steckelementaufnahmen 44 eingesteckt, die durch die Abdeckplatte 22 einteilig ausgebildet werden. Diese Steckelementaufnahmen 44 sind jeweils endseitig mit einem Längsschlitz 46 versehen, der von den Kontaktzungen 42 durchragt wird (vgl. Figuren 1, 3). Ein Längsschlitz 46 bildet ein Beispiel einer in der Abdeckplatte 22 als Beispiel einer Innenwand ausgesparten Durchtrittsöffnung aus.

Die Figur 4 verdeutlicht das Einstecken des PTC-Heizelementes 40 in die weibliche Steckelementaufnahme 44. Das PTC-Heizelement 40 hat für die beim Einstecken gefügte Steckverbindung einen Dichtkragen 48, der an die Abmessung der Steckelementaufnahme 44 angepasst ausgebildet ist und durch ein Elastomermaterial gebildet ist, welches innerhalb der Steckelementaufnahme 44 dichtend verpresst wird, so dass die Schlitze 46 gegenüber der Zirkulationskammer 14 fluiddicht abgedichtet sind. Darüber hinaus wird durch das Verpressen des den Dichtkragen 48 bildenden Materials das PTC-Heizelement 40 reibschlüssig innerhalb der Steckelementaufnahme 44 gehalten, und zwar auch in Steckrichtung, die der Längserstreckungsrichtung der Kontaktzungen 42 entspricht. In dieser Weise gefügt halten die PTC-Heizelemente 40 an der Abdeckplatte 22, auch wenn diese mit den Steckelementaufnahmen 44 nach unten ausgerichtet ist, wie dies in Figur 3 dargestellt wird.

### 2. Gehäusebasisteil

Die Figur 5 verdeutlicht in einer Schnittansicht das Wesen eines Ausführungsbeispiels eines Gehäusebasisteils, welches mit Bezugszeichen 50 gekennzeichnet ist. Das Gehäusebasisteil 50 bildet mit Bezugszeichen 52 gekennzeichnete Wandungen, die die Zirkulationskammer 16 umfänglich umgeben, d.h. die Heizkammern 16 und den Verbindungskanal 26 umfänglich umgeben. Die bei dem vorher beschriebenen Ausführungsbeispiel als separates Bauteil vorgesehene Abdeckplatte 22 ist vorliegend einteilig durch das Gehäusebasisteil 50 ausgebildet und bildet auch hier - wie bei dem ersten Ausführungsbeispiel - eine Trennwand 54 aus, die die Zirkulationskammer 16 von einer Anschlusskammer 56 trennt, in welcher vorliegend sämtliche Kontaktzungen 42 sämtlicher PTC-Heizelemente 40 freiliegen. Auch mit Bezugszeichen 58 gekennzeichnete und die Anschlusskammer umfänglich umgebende Wandungen werden durch das Gehäusebasisteil 50 ausgebildet. Schließlich werden in Verlängerung der Stutzen 6, 8 und in dieser Richtung hinter der Zirkulationskammer 16 bzw. der Anschlusskammer 56 durch das Gehäusebasisteil 50 Wandungen 60 gebildet, die eine Steuerkammer 62 umfänglich umgeben. Ein mit Bezugszeichen 64 gekennzeichneter Steuerkammerboden, von dem sich die Wandungen 60 erheben, wird teilweise durch eine der Wandungen 52 und eine der Wandungen 58 gebildet. In einer Querschnittsansicht, die parallel zu der Erstreckungsrichtung der Stutzen 6, 8 verläuft, erscheint das Gehäusebasisteil dementsprechend als im Querschnitt H-förmig mit einem einseitig an das H angesetzten U. Das Gehäusebasisteil 50 ist aus Kunststoff und als einheitliches Bauteil ausgebildet. Das Gehäusebasisteil 50 ist vorliegend aus einem Duroplasten gebildet.

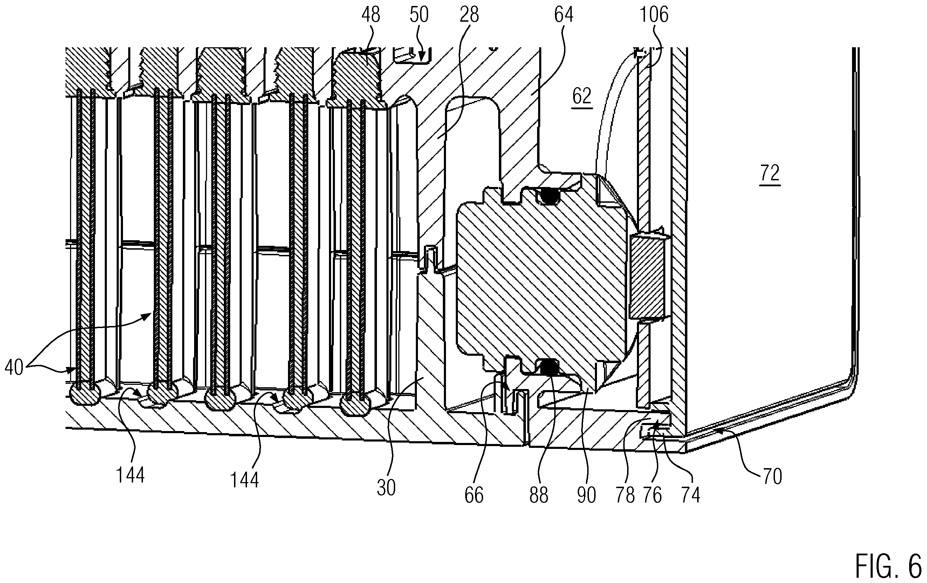

Die Wandungen 52, 58, 60 sind jeweils stirnseitig mit einer umlaufenden Nut 66, 68, 70 versehen. Die Funktion dieser Nuten 66, 68, 70 wird insbesondere durch Figur 6 verdeutlicht. So ist dort ein Abdeckelement 72 zu der Steuerkammer 62 dargestellt, welches als im Wesentlichen ebene Platte mit einem umlaufenden Kranz 74 ausgebildet ist. Dieser Kranz 74 greift in die zugehörige Nut 70 ein und verdrängt dort eingebrachten Kleber (vorliegend Epoxidkleber). Der Kranz 74 bildet einen äußeren Rand einer Gegennut 76, die an dem Abdeckelement 72 ausgeformt und innenseitig durch einen inneren Steg 78 begrenzt ist. Somit ist eine Art Labyrinthdichtung gebildet, in welche verdrängter Kleber eindringen kann, der vor der Montage des Abdeckelementens 72 entweder in die Nut 70 oder die Gegennut 76 eingebracht worden ist. In entsprechender Weise sind die Gehäusedeckel 80 zu der Zirkulationskammer 14 bzw. 82 zu der Anschlusskammer 56 randseitig ausgebildet und an dem Gehäusebasisteil 50 befestigt und dagegen abgedichtet.

Wie ebenfalls Figur 6 verdeutlicht, ist der Steuerkammerboden 64 mit einer Durchgangsöffnung 84 versehen, in die ein Kühlkörper 86 eingebracht ist. Zur Abdichtung der Zirkulationskammer 14 gegenüber der Steuerkammer 62 ist zwischen dem Kühlkörper 86 und der Innenumfangswandung der Durchgangsöffnung 84 ein Dichtring 88 vorgesehen. Der Kühlkörper 86 bildet steuergehäuseseitig einen ringförmigen Anschlag 90 aus, der gegen die stirnseitige Endfläche der Durchgangsöffnung 84 anliegt, die in Richtung auf die Steuerkammer 62 als vorspringender Kragen 92 verlängert und durch das Material des Gehäusebasisteils 50 ausgebildet ist.

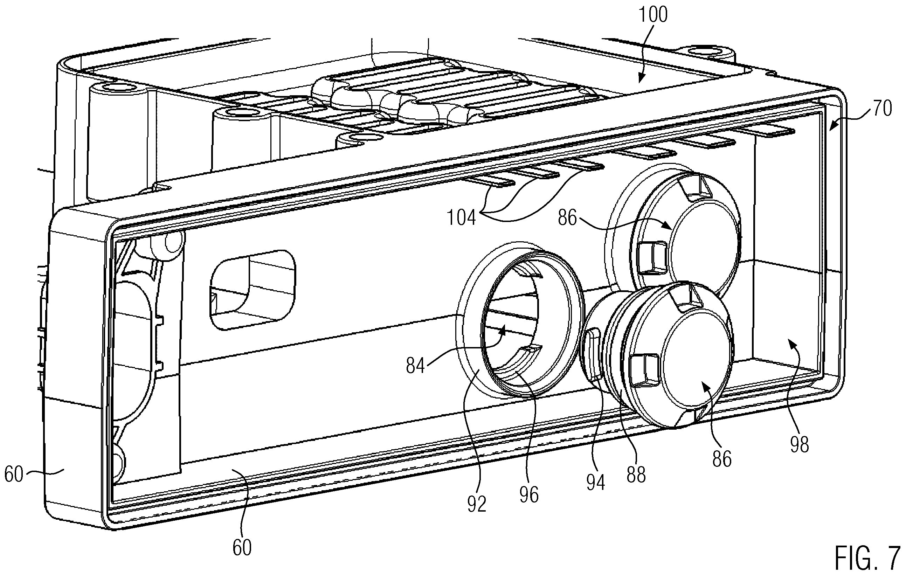

Wie Figur 7 erkennen lässt, wird die zumindest in Richtung auf die Zirkulationskammer 14 im Wesentlichen zylindrisch ausgebildete Außenumfangsfläche des Kühlkörpers 86 an gegenüberliegenden Seiten umfänglich von Verriegelungsvorsprüngen 94 überragt, die mit Verriegelungsnasen 96, die innenumfänglich die im Wesentlichen zylindrische Durchgangsöffnung 84 überragen, zusammenwirken, um einen Bajonettverschluss auszubilden, durch den der Kühlkörper 86 gegenüber dem Gehäusebasisteil 50 festgelegt ist. Der Dichtring 88 kann so ausgebildet sein, dass er diese Verriegelung unter axialer und/oder radialer Vorspannung hält. Zusätzlich kann der Steuerkammerboden 64 benachbart zu der Mündung in die Durchgangsöffnung 84 auf Seiten der Zirkulationskammer 14 mit Mulden versehen sein, in welche die Verriegelungsvorsprünge 94 eingreifen und die den Kühlkörper 86 formschlüssig drehgesichert halten, um ein unbeabsichtigtes Lösen des Bajonettverschlusses 94, 96 zu verhindern.

Die Figur 7 gibt den Blick in eine durch den Steuerkammerboden 64 und die Wandungen 60 gebildete Steuergehäusewanne frei, die im endmontierten Zustand durch das Abdeckelement 72 verschlossen ist.

Die Figur 5 zeigt oberhalb der Trennwand 54 eine durch die Trennwand 54 und die Wandungen 58 gebildete Anschlusswanne 100. Auf der in der Darstellung nach Figur 5 darunterliegenden Seite ist durch das Gehäusebasisteil 50 eine durch die Trennwand 54 und die Wandungen 52 gebildete Zirkulationswanne 102 ausgeformt. So bildet das Gehäusebasisteil 50 im Wesentlichen sämtliche Kammern 14, 56, 52, die lediglich durch die Abdeckelemente 72, 80, 82 abgedeckt werden müssen, um eine funktionsfähige und als Leichtbauteil aus Kunststoff ausgeformte elektrische Heizvorrichtung zu schaffen.

### 3. Dichtend umspritzte Stromschiene

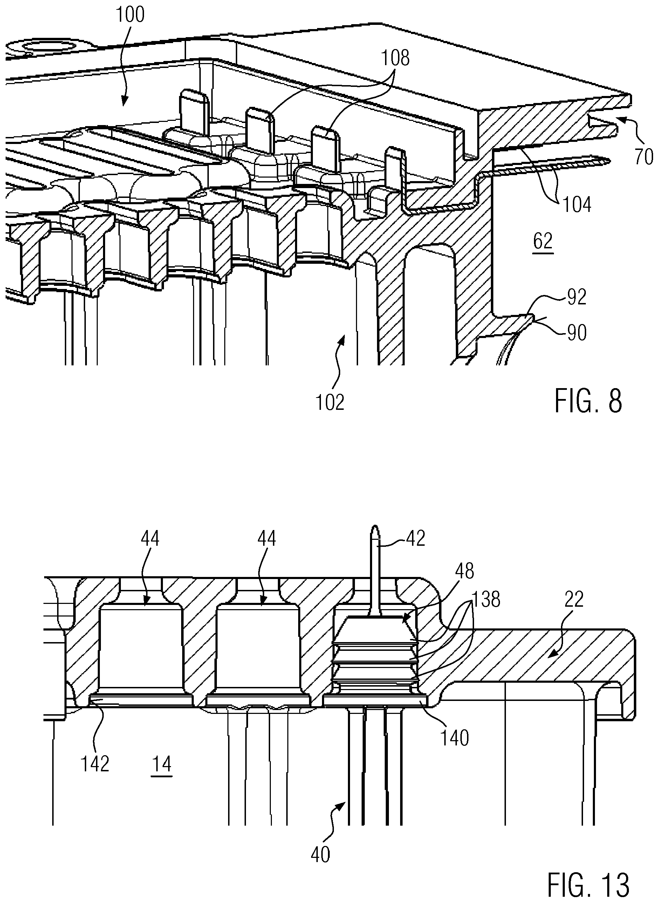

Die Figur 8 verdeutlicht eine Stromschiene 104, die als elektrische Leitungsbahn zwischen der Anschlusskammer 56 und der Steuerkammer 62 vorgesehen ist. Auf Höhe des Steuerkammerbodens 64 und innerhalb desselben ist die Stromschiene 104 zweifach gegenläufig um 90° umbogen. Ein innerhalb der Steuerkammer 62 befindliches Ende der Stromschiene 104 ist als Steckanschuss für eine innerhalb der Steuerkammer vorgesehene bestückte Leiterplatte 106 ausgebildet (vgl. Figur 6). Das andere Ende ist innerhalb der Anschlusskammer als Anschlusszunge 108 für eine innerhalb der Anschlusskammer vorgesehene und in den vorherigen Figuren weggelassene Verteilerplatte vorgesehen. Die Verteilerplatte kann gemäß EP 2 505 931 A1 ausgebildet sein. Durch mehrere hintereinander in identischer Weise vorgesehene Stromschienen 104 liegen mehrere Anschlusszungen 108 innerhalb der Anschlusskammer 56 frei. Die Anschlusszungen 108 erstrecken sich parallel zu den Kontaktzungen 42 zu den PTC-Heizelementen. So kann die Verteilerplatte zur Kontaktierung mit sämtlichen Kontakt- bzw. Anschlusszungen 42, 108 in die Anschlusskammer von oben eingesenkt werden.

### 4. Abschirmung

Die Blechstreifen 128 sind aus stanzbearbeiteten Blechen gebildet und stellen Ausführungsbeispiele für Kontaktbleche dar.

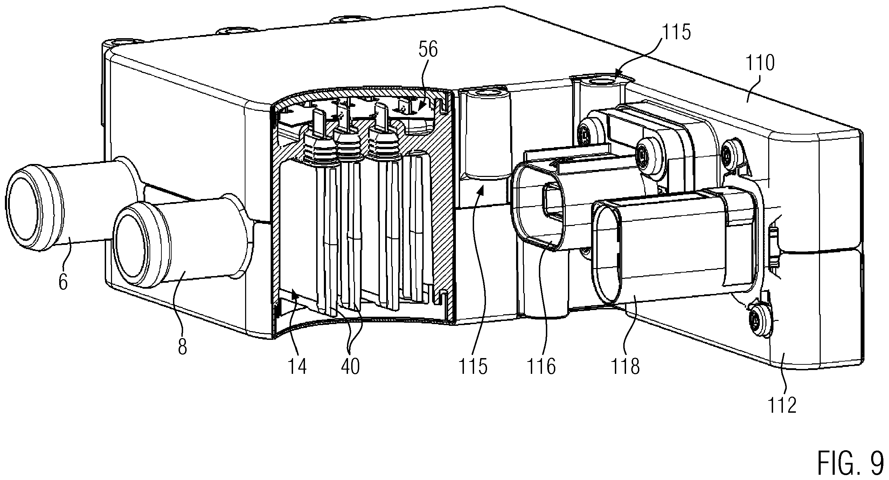

Die Figur 9 zeigt eine teilweise geschnittene Darstellung des zuvor beschriebenen Gehäuses 2. Dieses Kunststoffgehäuse 2 wird durch zwei Metallschalen 110, 112 umgeben, die eine Abschirmung der elektrischen Heizvorrichtung ausbilden, so dass elektromagnetische Strahlen nicht von dieser abgesetzt werden können. Die Teilungsebene der Metallschalen 110, 112 befindet sich in etwa auf mittlerer Höhe der beiden Stutzen 6, 8. Die Metallschalen 110, 112 umgeben das Gehäuse 2 im Wesentlichen vollumfänglich. Lediglich an dem Kunststoffgehäuse 2 ausgebildete Befestigungsvorsprünge 114 ragen durch an den Metallschalen 110, 112 ausgebildete Ausnehmungen 115 über die Metallschalen 110, 112 und die dadurch gebildete Abschirmung nach außen vor. Des Weiteren überragen mit Bezugszeichen 116 bzw. 118 gekennzeichnete Steckergehäuse, wobei das Steckergehäuse 116 für den vorliegend hochvoltigen Leistungsstrom und das Steckergehäuse 118 für die mit niedriger Voltage betriebenen Steuerleitungen vorgesehen ist. Die in Figur 9 gezeigte Ausführung erlaubt die Befestigung des Gehäuses 2 über die aus Kunststoff gebildeten Befestigungselemente 110. Mit diesem kann auf einfache Weise dem Erfordernis entsprochen werden, das Gehäuse 2 an der gewünschten Stelle innerhalb eines Kraftfahrzeuges zu befestigen. In Figur 9 sind die Metallschalen 110, 112 im Wesentlichen durchgehend ausgebildet. Sie können ebenso gut aus einem Lochblech gebildet sein, ohne dass die Wirkung der Metallschalen 110, 112 als EMV-Schutz verlorenginge.

### 5. PTC-Heizelement als Rahmenelement

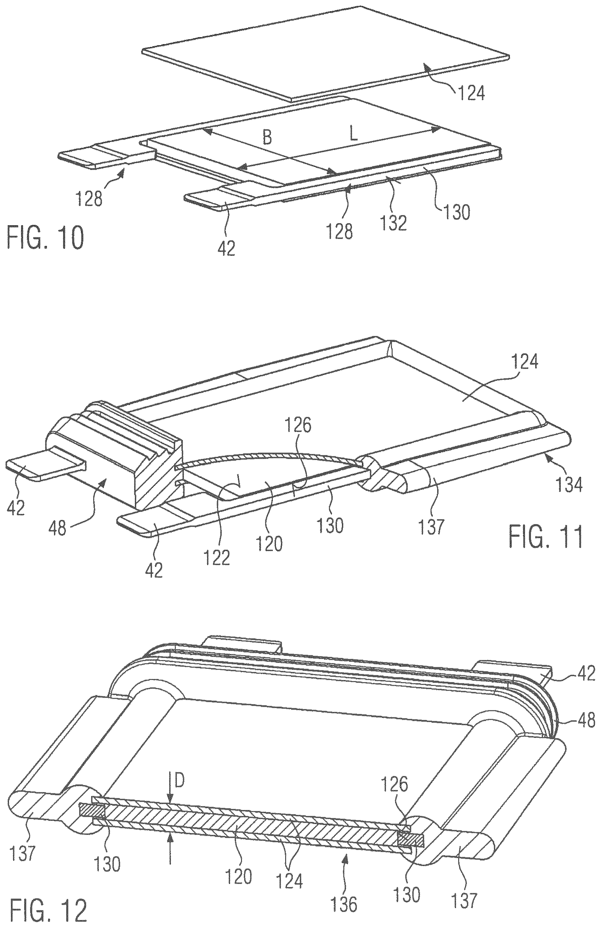

In Figur 10 ist ein PTC-Element 120 gezeigt, welches an seinen aneinander gegenüberliegenden Hauptseitenflächen 122 mit einer Isolierlage 124 belegt ist. Die Isolierlage 124 ist vorliegend eine Keramikplatte aus Aluminiumoxid. Sie kann aber auch als Beschichtung auf das PTC-Element 120 aufgebracht sein oder als Kombination einer Beschichtung mit einer ein- bzw. mehrschichtigen Isolierschicht verwirklicht sein. Das PTC-Element 120 ist als Plättchen ausgebildet mit einer Breite B bzw. einer Länge L, die um den Faktor von zumindest 10 größer sind, als die Dicke D, die dem Abstand der beiden Hauptseitenflächen 122 entspricht. Sich im Wesentlichen in Richtung der Länge L erstreckend sind an sich gegenüberliegenden Stirnseitenflächen 126 jeweils Blechstreifen 128 vorgesehen, die mit dem PTC-Element 120 verklebt und elektrisch leitend an einer oberflächigen Metallierung des PTC-Elements 128, die als Schutz mittels PVD oder CVD aufgebracht sein kann, angebunden sind. Diese Blechstreifen bilden jeweils Leiterbahnen zu unterschiedlichen Polaritäten aus, mit denen das PTC-Element 120 bestromt wird. Die Blechstreifen 12 bestehen aus einem Kontaktsteg 130, der relativ schmal ist, und der gegenüber dem Kontaktsteg 130 in Richtung der Breite B verbreiterten Kontaktzunge 42.

Die Kontaktstege 130 bilden vorliegend die Elektroden zu dem PTC-Element aus und sind mit der Metallisierung des PTC-Elements 120 elektrisch verbunden. Die Dicke der Kontaktzunge 42 ist geringer als die Dicke des Kontaktsteges 30. Dessen Dicke ist wiederum geringer als die Dicke D des PTC-Elementes. Der Blechstreifen 128 ist so vorgesehen, dass dieser an keiner Stelle die Hauptseitenflächen 122 des PTC-Elementes 120 überragt. Wie die Figuren 11 und insbesondere 12 erkennen lassen, ragen die Isolierlagen 124 seitlich über das PTC-Element 120 hinaus. Die Isolierlagen 124 haben demensprechend eine Grundfläche, die größer als die Grundfläche der Hauptseitenflächen 122 des PTC-Elementes 120 ist. Dementsprechend nehmen die äußeren Ränder der Isolierlagen 124 beidseitig den Kontaktsteg 130 zwischen sich auf (vgl. Figur 12). Jeder Kontaktsteg 130 ist mit einer der gegenüberliegenden Stirnseitenflächen 126 verklebt. Die Isolierlage 124 ist ebenfalls mit dem PTC-Element 120 verklebt. Die Isolierlage 124 liegt unmittelbar auf dem PTC-Element auf. So kontaktiert eine der Isolierlagen 124 die zugehörige Hauptseitenfläche 122 des PTC-Elementes unmittelbar.

Die Außenseite der jeweiligen Blechstreifen 128 ist vollkommen eben und erstreckt sich streng in Richtung der Länge L. Die Kontaktzungen 42 sind in Breitenrichtung größer als der Kontaktsteg 130 ausgebildet und überragen das PTC-Element 120 aufeinander zu (vgl. Figur 10). Die Kontaktzunge 42 ist auch dünner als der Kontaktsteg 130.

Der gegenüber dem Kontaktsteg 130 verbreiterte Bereich des Blechstreifens 128 ist in einem Heizelementgehäuse 134 aufgenommen, welches rahmenförmig das PTC-Element 120 umgibt. Dieser Kunststoffrahmen 134 schließt die umlaufenden Ränder der Isolierlagen 124 ein. Auch die Randflächen 132 sind von dem den Kunststoffrahmen 134 bildenden Material eingesiegelt. Der Kunststoffrahmen 134 ist durch Umspritzen eines Elastomermaterials als elastomerer Kunststoffrahmen 134 ausgebildet. Bei dem fertigen PTC-Heizelement 40 überragen lediglich die Kontaktzungen 42 an einer Stirnseite den Kunststoffrahmen 134. Alle anderen funktionalen und für die Wärmeerzeugung und Stromführung dienenden Teile des PTC-Heizelementes 40 sind innerhalb des Kunststoffrahmens 134 aufgenommen. Wie insbesondere Figur 12 verdeutlicht, liegt das PTC-Element 120 mit seinen gegenüberliegenden Hauptseitenflächen 122 hinter mit Bezugszeichen 136 gekennzeichneten und durch den Kunststoffrahmen 134 gebildeten Rahmenöffnungen. Diese Rahmenöffnungen 136 werden bedeckt durch die Isolierlage 124. Vorliegend ergibt sich nahezu überhaupt keine Überdeckung des Kunststoffrahmens 134 mit den Hauptseitenflächen 122 des PTC-Elementes, so dass dieses zu annähernd 100% seiner Hauptseitenflächen 122 hinter den Rahmenöffnungen 136 freiliegt.

Die rechtwinklig von dem Dichtkragen 48 abragenden Rahmenholme des Kunststoffrahmens 134 sind jeweils mit randseitigen Anlagenstegen 137 versehen. Die Anlagestege 137 sind nach Art von verjüngten Lamellen ausgebildet, die eine gegenüber der Dicke des Kunststoffrahmens 134 verjüngte Dicke haben. Wie sich beispielsweise auf Figur 6 entnehmen lässt, sind die PTC-Heizelement 40 jeweils hintereinander leicht versetzt vorgesehen, so dass jedes erste PTC-Heizelement 40 an der linken Seite an einer Wandung des Gehäuses 2 anliegt und dort über den dichtend gegen eine Begrenzungswand der Zirkulationskammer 14 anliegenden Anlagesteg 137 abgedichtet sind. So kann auf dieser Seite kein Fluid an dem PTC-Element 40 vorbeiströmen, wohl aber an dem in Strömungsrichtung davor bzw. dahinter liegenden PTC-Heizelement. Dieses wiederum liegt mit seinem Anlagesteg 137 an der gegenüber liegenden Seite an der die Zirkulationskammer 14 begrenzten Wandung an und verlegt dort den Strömungskanal. So wird durch alternierendes Anordnen der PTC-Heizelemente 40 ein mäandrierender Strömungskanal ausgebildet.

### 6. Steckverbindung

Der Kunststoffrahmen 134 bildet ferner den zuvor bereits beschriebenen Dichtkragen 48 aus, der mit zu dem freien Ende der Kontaktzungen 42 konisch zulaufenden Segmenten 138 versehen ist (vgl. Figur 13). Vorliegend sind drei dieser Segmente 138 in Längserstreckungsrichtung der Kontaktzunge 42 hintereinander vorgesehen. Zwischen der Rahmenöffnung 136 und diesen Segmenten 138 ist ein ringförmiger Anschlag 140 durch das Heizelementgehäuse 134 ausgebildet. Wie Figur 13 verdeutlicht, liegt dieser Anschlag dichtend gegen eine zylindrische und durch die weibliche Steckelementaufnahme 44 gebildete Gegenfläche 142 an.

Wie die Figuren 2 und 5 verdeutlichen, liegt die gegenüberliegende Seite der PTC-Elemente 40 nach dem Einbau an dem Boden 18 des Gehäuses 2 an. Zur genauen Positionierung sind in dem Boden 18 Vertiefungen 144 vorgesehen, in welchen die Stirnseitenflächen des Heizelementgehäuses 134 aufgenommen sind. Dadurch wird eine exakt rechtwinklige Positionierung der PTC-Heizelemente 40 relativ zu der Trennwand 54 gewährleistet. Des Weiteren wird eine Haltekraft erzeugt, die verhindert, dass die in der Trennwand 54 steckverbundenen PTC-Heizelemente 40 beim Betrieb und insbesondere aufgrund der Vibration des Fahrzeuges aus den weiblichen Steckelementaufnahmen 44 herausfallen können. Diese bodenseitige Anlage der PTC-Heizelemente 40 sichert auch die Anpresskraft innerhalb der Steckkontaktierung der PTC-Heizelemente, so dass diese sicher und auch dauerhaft die Längsschlitze 46 zu der Anschlusskammer 56 abdichten.

Es versteht sich von selbst, dass auf die Vertiefungen 144 auch verzichtet werden kann. Ähnlich zu den Anlagestegen 137 kann auch an der dem Dichtkragen 48 gegenüber liegenden Unterseite des Kunststoffrahmens 134 ein Anlagesteg 137 vorgesehen sein, der sich unter elastischer Kompression gegen den Boden 18 des Gehäuses 2 abstützt und dort abdichtet. Hierdurch wird nicht nur eine fluiddichte Abdichtung zwischen der Unterseite des PTC-Heizelementes 40 und dem Gehäuse 2 geschaffen. Vielmehr noch wird durch die Kompression des Anlagesteges auch eine Druckkraft erzeugt, welche das PTC-Heizlement 40 auch dann unverlierbar in der weiblichen Steckelementaufnahme 44 hält, wenn starke Vibrationen auf die elektrische Heizvorrichtung einwirken.

### 7. Elektrischer Anschluss der PTC-Heizelemente

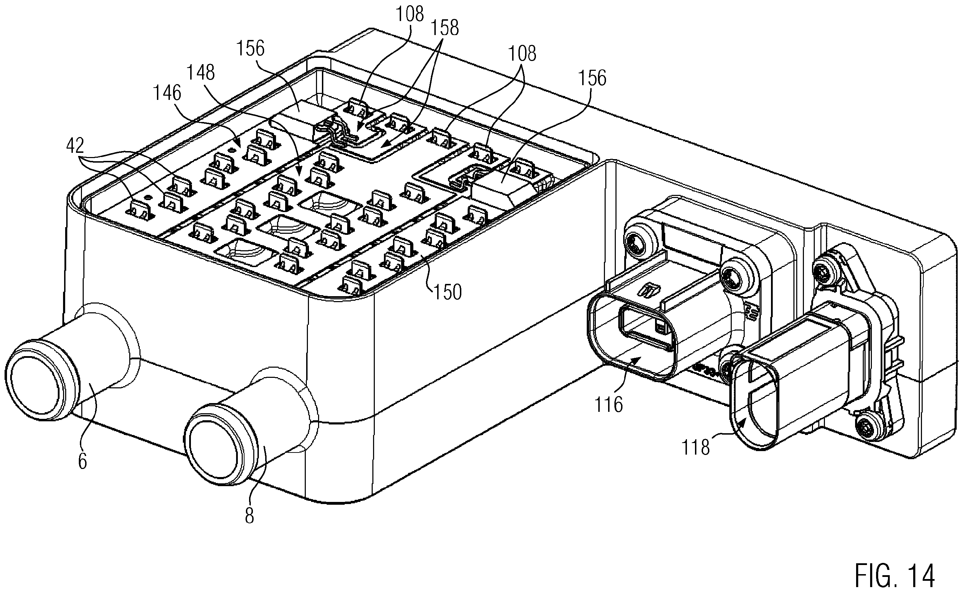

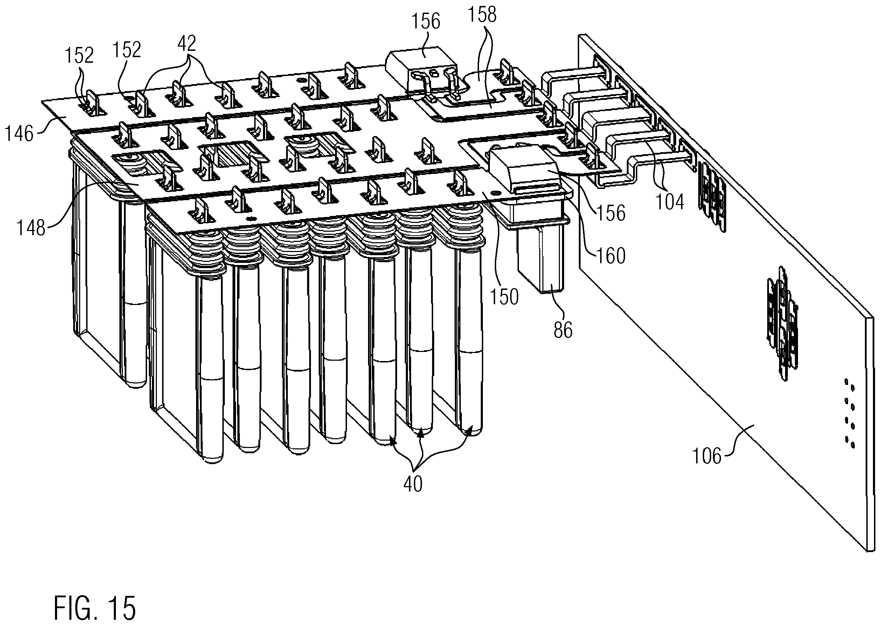

Die Figuren 14-16 verdeutlichen den elektrischen Anschluss der PTC-Heizelemente 40 am Beispiel einer weiteren Ausführungsform. Dabei zeigt Figur 15 das Ausführungsbeispiel ohne das Gehäuse 2 und Teile davon, ähnlich zu der Darstellung in Figur 3. Für den elektrischen Anschluss sind in der Anschlusskammer 56 gestanzte Bleche als Stromschienen 146, 148, 150 vorgesehen, die durch Stanzen und Biegen ausgebildete Kontaktvorsprünge 152 aufweisen, die unter elastischer Vorspannung gegen die Kontaktzungen 42 anliegen und diese kontaktieren. Die Kontaktvorsprünge 152 ragen in Aufnahmeöffnungen 154 hinein, die in den Blechstreifen der Stromschienen 146, 148, 150 ausgespart sind. Die mit Bezugszeichen 148 gekennzeichnete Stromschiene hat eine entsprechende Aufnahmeöffnung 154 mit Kontaktvorsprüngen 152 für die Stromschiene 104. Die mit Bezugszeichen 146 bzw. 148 gekennzeichneten Stromschienen sind jeweils mit einem Leistungstransistor 156 bestückt, der elektrisch leitend mit der entsprechenden Stromschiene 146, 150 verbunden und darauf montiert ist. Die Leistungstransistoren 156 sind eingangsseitig mit ebenfalls als Stromschienen ausgebildeten Zuleitern 158 verbunden, die wiederum Aufnahmeöffnungen 154 mit Kontaktvorsprüngen 152 für die Kontaktierung über jeweils eine Stromschien 104 versehen sind. Danach erfolgt die elektrische Leitung innerhalb der Einschlusskammer 56 allein durch Blechelemente. Diese Blechelemente sind ausschließlich mit den Leistungstransistoren 156 als elektrische bzw. elektronische Bauteile bestückt. Es sind keine weiteren elektrischen bzw. elektronischen Bauteile vorgesehen.

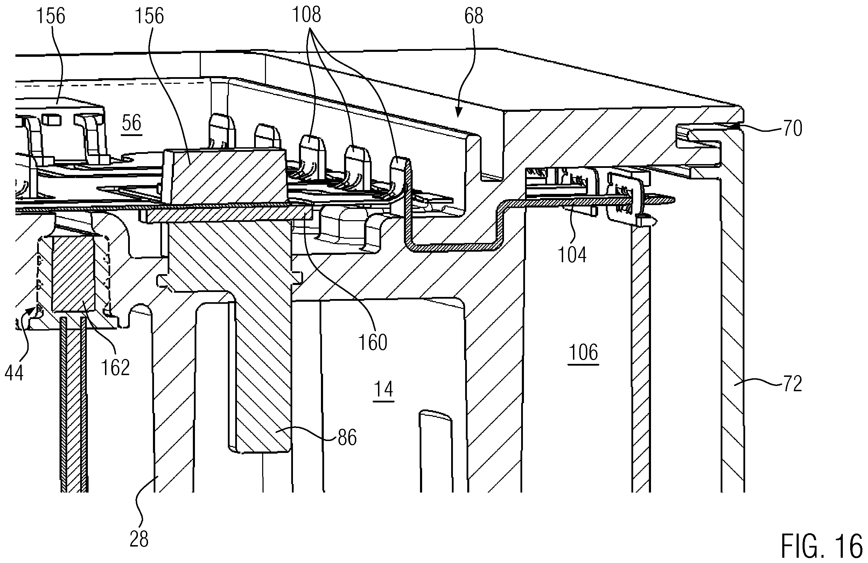

Wie insbesondere Figur 16 verdeutlicht, sind diese Metallplatten 146, 148, 150, 158 elektrisch voneinander isoliert in die Anschlusskammer 56 eingesetzt und dort positioniert. Die auf der Leiterplatte 106 verarbeiteten Steuersignale zum Ansteuern der Leistungstransistoren 146 werden über zumindest einen der Zuleiter 158 dem jeweiligen Leistungstransistor 156 zugeführt.

Die Figur 16 verdeutlicht eine Schnittansicht auf Höhe eines auch in Figur 15 mit Bezugszeichen 86 gekennzeichneten Kühlkörpers. Zwischen dem Kühlkörper 86 und dem Leistungstransistor 156 ist eine elektrische Isolierschicht 160 beispielsweise aus Kapton oder einer Keramikplatte verwirklicht. Die zwischen dieser Isolierschicht 160 und dem Leistungstransistor 156 vorgesehene Stromschiene 146, 150 führt zu einer gewissen Spreizung der von dem Leistungstransistor 156 abgegebenen Wärme. Dazu kann die Stromschiene 146 bzw. 150 zumindest im Bereich des Leistungstransistors 156 mit größerer Dicke ausgebildet sein. Ebenso gut ist es möglich, die Stromschiene 146 bzw. 150 aus Kupfer und damit einem gut wärmeleitfähigem Material auszuformen. Das Blechmaterial kann im Bereich des Leistungstransistors 156 durch Konturwalzen eine erhöhte Dicke aufweist.

Die Stromschienen 146, 148, 150, 158 können durch Stanzbearbeitung mit einer Crimplasche oder dergleichen versehen sein, die mit dem Gehäuse 2 in Wechselwirkung tritt, um die jeweilige Stromschiene 146, 148, 150, 158 an dem Gehäuse 2 befestigen und/oder den Leistungstransistor 146 unter Vorspannung gegen den Kühlkörper 86 anzulegen bzw. zu drücken.

Die Figur 16 lässt auch eine Variante des PTC-Heizelementes 40 erkennen. Danach sind die Kontaktzungen 42 innerhalb des Kunststoffrahmens 134 in einem aus einer harten Kunststoffkomponente gebildeten Befestigungsstopfen 162 aufgenommen. Die Kontaktzungen 42 sind durch Umspritzen in dem Befestigungsstopfen 162 aufgenommen. Der Befestigungsstopfen 162 besteht aus einem harten Kunststoff mit guten Kriechstrom- und Durchschlagsfestigkeit. Der Befestigungsstopfen 162 bildet einen harten Kern für das durch das PTC-Heizelement 40 gebildete männliche Steckelement. Dieser Befestigungsstopfen 162 ist lediglich durch einen dünnen Überzug aus dem weichelastischen Material des Dichtkragens 48 überzogen, wodurch die durch den Dichtkragen 48 gebildete Kompressionskraft innerhalb der weiblichen Steckelementaufnahme 44 gesteigert wird. Der Befestigungsstopfen 162 kann beispielsweise durch Umspritzen von zwei Blechstreifen 128 erfolgen, die jeweils für sich die Kontaktstege 130 und die Kontaktzungen 42 als einteiliges Bauteil ausformen. In dieser Weise vorbereitet und räumlich-körperlich relativ zueinander positioniert kann der Befestigungsstopfen 162 zusammen mit dem Blechstreifen 128 wie zuvor beschrieben mit der weichelastischen Kunststoffkomponente zur Ausbildung des Kunststoffrahmen 134 überspritzt werden.

Auch bei der Variante nach den Figuren 14-16 ist der Dichtkragen länglich ausgebildet. Es versteht sich aber von selbst, dass jede einzelne Kontaktzunge 42 in einem zylindrischen Dichtkragen mit im Grunde kreisrunder oder ovaler Querschnitts fläche angeordnet sein kann. Die weibliche Steckelementaufnahme 44 ist dann ebenfalls mit kreisrundem bzw. ovalem Querschnitt versehen. Eine solche Ausgestaltung kann die Dichtigkeit gegenüber dem konkret beschriebenen Ausführungsbeispiel erhöhen. Es versteht sich von selbst, dass auch polygonale Querschnitts flächen möglich sind.

Figur 16 lässt ferner die Befestigung des Kühlkörpers 86 innerhalb der Trennwand 54 erkennen. Der Kühlkörper 86 hat auf Höhe der Trennwand 54 an seinem Außenumfang einen den Kühlkörper 86 randseitig überragenden Befestigungskragen 164, der durch Umspritzen des die Trenne 54 bildenden Kunststoffmaterials formschlüssig eingesiegelt ist. Die Ausgestaltung des Befestigungskragens 164 verbessert im Übrigen die Dichtigkeit zwischen der Zirkulationskammer 14 und der Anschlusskammer 56.

Gemäß einer nicht dargestellten Variante kann die zu der Anschlusskammer 56 ragende Oberfläche des Kühlkörpers 86 auch von dem die Trennwand 54 ausbildenden Kunststoffmaterial überzogen sein. Beim Überspritzen des Kühlkörpers 46 kann ein dünner Film mittels Spritzgießen zwischen der Oberfläche des Kühlkörpers 86 und dem Innenraum der Anschlusskammer 56 ausgebildet sein, über welchen der Leistungstransistor 156 an dem Kühlkörper 68 elektrisch isoliert anliegt. Hierdurch wird die Fertigung weiter vereinfacht. Eine separate elektrische Isolierlage muss nicht zwischen dem Leistungstransistor 156 und dem Kühlkörper 86 vorgesehen werden.

### Bezugszeichenliste

- 2: Gehäuse
- 4: Gehäusewannenelement
- 6: Einlassstutzen
- 8: Auslassstutzen
- 10: Einlassöffnung
- 12: Auslassöffnung
- 14: Zirkulationskammer
- 16: Heizkammer
- 18: Boden
- 20: Teilungswand
- 22: Abdeckplatte
- 24: Teilungswand
- 26: Verbindungskanal
- 28: Kanalwandsegment
- 30: Kanalwandsegment
- 32: Rand
- 34: Nut
- 40: PTC-Heizelement
- 42: Kontaktzunge
- 44: weibliche Steckelementaufnahme
- 46: Längsschlitz
- 48: Dichtkragen
- 50: Gehäusebasisteil
- 52: Wandung
- 54: Trennwand
- 56: Anschlusskammer
- 58: Wandung
- 60: Wandung
- 62: Steuerkammer
- 64: Steuerkammerboden
- 66: Nut der Zirkulationskammer 14
- 68: Nut der Anschlusskammer 56
- 70: Nut der Steuerkammer 62
- 72: Abdeckelement zu der Steuerkammer 62
- 74: Kranz
- 76: Gegennut
- 78: innerer Steg
- 80: Gehäusedeckel zu der Zirkulationskammer
- 82: Gehäusedeckel zu der Anschlusskammer
- 84: Durchgangsöffnung
- 86: Kühlkörper
- 88: Dichtring
- 90: Anschlag
- 92: Kragen
- 94: Verriegelungsvorsprung
- 96: Verriegelungsnase
- 98: Steuerwanne
- 100: Anschlusswanne
- 102: Zirkulationswanne
- 104: Stromschiene
- 106: Leiterplatte
- 108: Anschlusszunge
- 110: Metallschale
- 112: Metallschale
- 114: Befestigungsvorsprung
- 115: Ausnehmung
- 116: Steckergehäuse Hochvolt
- 118: Steckergehäuse Niedrigvolt
- 120: PTC-Element
- 122: Hauptseitenfläche
- 124: Isolierlage
- 126: Stirnseitenfläche
- 128: Blechstreifen
- 130: Kontaktsteg
- 132: Randfläche
- 134: Heizelementgehäuse/Kunststoffrahmen
- 136: Rahmenöffnung
- 137: Anlagesteg
- 138: Segment
- 140: Anschlag
- 142: Gegenfläche
- 144: Vertiefung
- 146: Stromschiene
- 148: Stromschiene
- 150: Stromschiene
- 152: Kontaktvorsprung
- 154: Aufnahmeöffnung
- 156: Leistungstransistor
- 158: Zuleiter
- 160: Isolierschicht
- 162: Befestigungstopfen
- 164: Befestigungskragen
- B: Breite des PTC-Elementes
- L: Länge des PTC-Elementes
- D: Dicke des PTC-Elementes

## Patentansprüche

1. Elektrische Heizvorrichtung mit mehreren in einer Zirkulationskammer (14) angeordneten PTC-Heizelementen (40) mit einem Heizelementgehäuse (134), das zumindest ein PTC-Element (120) und das PTC-Element bestromende Kontaktzungen (42) für eine elektrische Steckverbindung ausformende Kontaktbleche (128) als bauliche Einheit fügt, und mit einer Trennwand (54), die die Zirkulationskammer (14) von einer Anschlusskammer (56) trennt, in der die die Trennwand (54) durchragenden Kontaktzungen (42) des PTC-Heizelementes (40) freiliegen und elektrisch angeschlossen sind,
**gekennzeichnet durch**
eine zwischen der Trennwand (54) und dem PTC-Heizelement (40) ausgebildete Steckverbindung, wobei das PTC-Heizelement (40) das männliche Steckelement und die Trennwand (54) das weibliche Steckelement der Steckverbindung ausbildet und das PTC-Heizelement (40) einen die Kontaktbleche (128) umgebenden weichelastischen Dichtkragen (48) ausbildet, der in einer Steckaufnahme (44) der Trennwand (54) dichtend eingepresst ist, so dass das PTC-Heizelement (40) reibschlüssig an der Trennwand (54) auch dann gehalten ist, wenn die Steckelementaufnahme (44) nach unten gerichtet ist.

2. Elektrische Heizvorrichtung nach Anspruch 1, **gekennzeichnet durch** der Steckverbindung zugeordnete Dichtungsmittel, durch die das PTC-Heizelement (40) gegenüber der Trennwand (54) fluiddicht abgedichtet ist.

3. PTC-Heizelement für eine elektrische Heizvorrichtung nach einem der vorherigen Ansprüche, wobei das PTC-Heizelement (40) ein Heizelementgehäuse (134) hat, das zumindest ein PTC-Element (120) und das PTC-Element (120) bestromende Kontaktzungen (42) für den elektrischen Anschluss von elektrisch mit dem PTC-Element (120) verbundenen Leiterbahnen (128) als bauliche Einheit fügt, **dadurch gekennzeichnet, dass** das Heizelementgehäuse (134) durch ein Elastomer gebildet ist, welches das wenigstens eine PTC-Element (120) umfänglich einsiegelnd umschließt und dass das Elastomermaterial einen die Kontaktzungen (42) umfänglich umsiegelnden Dichtkragen (48) ausbildet, der als Steckverbindung für die Halterung des PTC-Heizelementes (40) angepasst ausgebildet ist.

4. PTC-Heizelement nach Anspruch 3, **dadurch gekennzeichnet, dass** der Dichtkragen (48) in Richtung auf die freien Enden der Kontaktzungen (42) konisch zulaufend ausgebildet ist.

5. PTC-Heizelement einem der Ansprüche 3 oder 4, **dadurch gekennzeichnet, dass** die Leiterbahnen als Kontaktbleche ausgebildet sind und dass das Heizelementgehäuse (134) als die Kontaktbleche (128) und das wenigstens eine PTC-Element (120) lediglich umfänglich fassender Rahmen (134) ausgebildet ist.

6. PTC-Heizelement nach Anspruch 5, **dadurch gekennzeichnet, dass** der Rahmen (134) eine Rahmendicke hat, die nicht größer als 0,5 der größten Dicke des Dichtkragens (48) ist.

7. PTC-Heizelement einem der Ansprüche 3 bis 6, **dadurch gekennzeichnet, dass** einander gegenüberliegende Hauptseitenflächen des PTC-Elementes (120) nicht mit dem Elastomermaterial belegt sind.

8. PTC-Heizelement nach einem der Ansprüche 3 bis 7, **dadurch gekennzeichnet, dass** einander gegenüberliegende Hauptseitenflächen (122) des zumindest einen PTC-Elementes (120) ganz überwiegend nicht mit einem Kontaktblech belegt sind.

9. PTC-Heizelement nach einem der Ansprüche 3 bis 8, **gekennzeichnet durch** eine Isolierlage (124), die unmittelbar an einer Hauptseitenfläche (122) des PTC-Elementes (120) wärmeleitend angelegt ist bzw. darauf vorgesehen ist.

10. PTC-Heizelement nach einem der Ansprüche 3 bis 9, **gekennzeichnet durch** die Elektroden bildende Blechstreifen (128), die jeweils einen stirnseitig an dem PTC-Element (120) anliegenden Kontaktsteg (130) und die Kontaktzunge (42) ausbilden, die gegenüber dem Kontaktsteg (130) in der Breitenebene des PTC-Elements (120) verbreitetert ist.

11. PTC-Heizelement nach Anspruch 10, **dadurch gekennzeichnet, dass** der Blechstreifen (128) an gegenüberliegenden Stirnseitenflächen (126) des PTC-Elementes (120) elektrisch leitend angeklebt sind.

## Claims

1. Electric heating device with several PTC heating elements (40) that are arranged in a circulation chamber (14) and comprise a heating element casing (134) which fits as a structural unit at least one PTC element (120) and contact plates (128) that energize said PTC element and form contact strips (42) for an electrical plug connection, and with a partition wall (54) which separates said circulation chamber (14) from a connection chamber (56) in which said contact strips (42) of said PTC heating element (40) penetrating said partition wall (54) are exposed and electrically connected,
**characterized by**
a plug connection which is formed between said partition wall (54) and said PTC heating element (40), wherein said PTC heating element (40) forms the female plug element and said partition wall (54) forms the female plug element of the plug connection, wherein said PTC heating element (40) forms a soft elastic sealing collar (48) which surrounds said contact plate (128) and is sealingly pressed into a plug holding fixture (44) of said partition wall (54), so that said PTC heating element (40) is held in a frictionally engaged manner on said partition wall (54) in case the plug holding fixture (44) faces downward.

2. Electric heating device according to claim 1, **characterized by** a sealing device which is associated with the plug connection and by way of which said PTC heating element (40) is sealed fluidically tight against said partition wall (54).

3. PTC heating element for an electric heating device according to one of the preceding claims, where said PTC heating element has a heating element casing (134) which fits as a structural unit at least one PTC element (120) and contact strips (42) energizing said PTC element (120) for an electrical plug connection of conductor tracks (128) which are electrically connected to said PTC element (120), **characterized in that** said heating element casing (134) is formed by an elastomer which circumferentially encloses said at least one PTC element (120) in sealing manner and that said elastomeric material forms a sealing collar (48) which circumferentially surrounds said contact strips (42) and is configured as a plug connection adapted for holding said PTC heating element (40).

4. PTC heating element according to claim 3, **characterized in that** said sealing collar (48) is formed conically tapered towards the free ends of said contact strips (42).

5. PTC heating element according to one of the claims 3 or 4, **characterized in that** said conductor tracks are configured as contact plates (128) and that said heating element casing (134) is configured as said contact plates (128) and said at least one PTC element (120) only circumferentially enclosing frame (134).

6. PTC heating element according to claim 5, **characterized in that** said frame (134) has a frame thickness which is not greater than 0.5 of the greatest thickness of said sealing collar (48).

7. PTC heating element according to one of the claims 3 to 6, **characterized in that** mutually oppositely disposed main side surfaces of said PTC element (120) are not covered by said elastomeric material.

8. PTC heating element according to one of the claims 3 to 7, **characterized in that** mutually oppositely disposed main side surfaces (122) of said at least one PTC element (120) are not predominantly not covered by a contact plate.

9. PTC heating element according to one of the claims 3 to 8, **characterized by** an insulation layer (124) which is applied directly onto a main side surface (122) of said PTC element (120) or is provided thereon, respectively.

10. PTC heating element according to one of the claims 3 to 9, **characterized by** sheet metal strips (128) which form the electrodes and each form a contact ridge (130) that abuts against said PTC element (120) on the face side and form said contact strip (42) which is broadened in the width plane of the PTC element (120) as compared to said contact ridge (130).

11. PTC heating element according to claim 10, **characterized in that** said sheet metal strip (128) is adhesively bonded in an electrically conductive manner to oppositely disposed face side surfaces (126) of said PTC element (120).

## Revendications

1. Dispositif de chauffage électrique avec plusieurs éléments chauffants PTC (à coefficient de température positif) (40) agencés dans une chambre de circulation (14), et comportant un boitier d'élément chauffant (134), qui assemble sous forme d'unité de construction, ledit au moins un élément PTC (120) et des tôles de contact (128) formant des fiches de contact (42) alimentant en courant l'élément PTC pour assurer une connexion électrique de branchement, le dispositif comprenant également une paroi de séparation (54), qui sépare la chambre de circulation (14) d'une chambre de raccordement (56) dans laquelle les fiches de contact (42) de l'élément chauffant PTC (40), qui traversent la paroi de séparation (54), sont librement accessibles et raccordées électriquement,
**caractérisé par** une liaison à enfichage formée entre la paroi de séparation (54) et l'élément chauffant PTC (40), l'élément chauffant PTC (40) formant l'élément enfichable mâle et la paroi de séparation (54) l'élément à enfichage femelle de la liaison à enfichage, et l'élément chauffant PTC (40) forme une collerette d'étanchéité (48) élastique souple, qui entoure les tôles de contact (128) et est pressée de manière étanche dans un logement d'enfichage (44) de la paroi de séparation (54) de manière telle, que l'élément chauffant PTC (40) soit maintenu par adhérence dans la paroi de séparation (54) également lorsque le logement d'enfichage (44) est dirigé vers le bas.

2. Dispositif de chauffage électrique selon la revendication 1, **caractérisé par** des moyens d'étanchéité associés à la liaison à enfichage, et par lesquels l'élément chauffant PTC (40) est rendu étanche aux fluides par rapport à la paroi de séparation (54).

3. Elément chauffant PTC pour un dispositif de chauffage électrique selon l'une des revendications précédentes, l'élément chauffant PTC (40) possédant un boitier d'élément chauffant (134), qui assemble sous forme d'unité de construction, ledit au moins un élément PTC (120) et des fiches de contact (42) alimentant en courant l'élément PTC (120) pour assurer une connexion électrique de branchement de pistes conductrices (128) reliées électriquement à l'élément PTC (120), **caractérisé en ce que** le boitier d'élément chauffant (134) est réalisé en un élastomère, qui entoure ledit au moins un élément PTC (120) en le scellant de manière périphérique, et **en ce que** le matériau d'élastomère forme une collerette d'étanchéité (48), qui entoure les fiches de contact (42) en les scellant de manière périphérique, et qui est d'une configuration adaptée à former une liaison à enfichage pour assurer le maintien de l'élément chauffant PTC (40).

4. Elément chauffant PTC selon la revendication 3, **caractérisé en ce que** la collerette d'étanchéité (48) est d'une configuration se rétrécissant de manière conique en direction des extrémités libres des fiches de contact (42).

5. Elément chauffant PTC selon l'une des revendications 3 ou 4, **caractérisé en ce que** les pistes conductrices sont réalisées sous forme de tôles de contact, et **en ce que** le boitier d'élément chauffant (134) est réalisé en tant que cadre (134) enserrant uniquement de manière périphérique les tôles de contact (128) et ledit au moins un élément PTC (120).

6. Elément chauffant PTC selon la revendication 5, **caractérisé en ce que** le cadre (134) présente une épaisseur de cadre qui n'est pas supérieure à 0,5 fois l'épaisseur la plus grande de la collerette d'étanchéité (48).

7. Elément chauffant PTC selon l'une des revendications 3 à 6, **caractérisé en ce que** des faces latérales principales mutuellement opposées de l'élément PTC (120) ne sont pas recouvertes par le matériau d'élastomère.

8. Elément chauffant PTC selon l'une des revendications 3 à 7, **caractérisé en ce que** des faces latérales principales (122) mutuellement opposées dudit au moins un élément PTC (120) ne sont, dans une très large mesure, pas recouvertes avec une tôle de contact.

9. Elément chauffant PTC selon l'une des revendications 3 à 8, **caractérisé par** une couche d'isolation (124), qui est appliquée ou est prévue directement sur une face latérale principale (122) de l'élément PTC (120), en assurant une conduction thermique avec celle-ci.

10. Elément chauffant PTC selon l'une des revendications 3 à 9, **caractérisé par** des bandes de tôle (128) formant les électrodes, qui forment respectivement une nervure de contact (130) s'appuyant sur un côté frontal de l'élément PTC (120) et la fiche de contact (42), qui est élargie par rapport à la nervure de contact (130) dans le plan de la largeur de l'élément PTC (120).

11. Elément chauffant PTC selon la revendication 10, **caractérisé en ce que** la bande de tôle (128) est collée de manière électriquement conductrice sur des surfaces de côté frontal (126) mutuellement opposées de l'élément PTC (120).
